# EUROPEAN PATENT APPLICATION

(11) **EP 4 070 868 A1**
(43) Date of publication of application: **12.10.2022**
(21) Application number: 20909691.6
(22) Date of filing: 23.11.2020
(51) Int. Cl.: B01D 3/32

(54) **TRAY-TYPE DISTILLATION APPARATUS**

(30) Priority: 30.12.2019 KR 20190177408
(71) Applicant: Hanwha Solutions Corporation, Jung-gu Seoul 04541 (KR)
(72) Inventor: LIM, Dongwook, Daejeon 34128 (KR); LEE, Shinbeom, Daejeon 34128 (KR); SONG, Junhye, Daejeon 34128 (KR); AHAN, Wooyoul, Daejeon 34128 (KR); JEON, Hyojin, Daejeon 34128 (KR); HAN, Keedo, Daejeon 34128 (KR)
(74) Representative: von Tietzen und Hennig, Nikolaus
(86) International application number: PCT/KR2020/016577
(87) International publication number: WO 2021/137435

(57) **Abstract**

Provided are a tray type distillation apparatus and a distillation method. According to the distillation apparatus and the distillation method according to the present disclosure, since a plurality of distillation target material supply units are provided so that a distillation target material may be dispersed, it is possible to reduce a pressure difference between an inside of a body part and the distillation target material supply unit and prevent foams or bubbles from occurring.

## Description

### [Technical Field]

The present disclosure relates to a distillation apparatus, and more particularly, to a distillation apparatus for recovering a high-purity product by separating a targeted volatile component from a distillation target material, and a column type distillation apparatus having a tray.

### [Background Art]

A tray type distillation apparatus is an apparatus used for stripping residual monomer (VCM) in a poly vinyl chloride (PVC) polymerization process.

In this case, foams or bubbles may be formed according to gas-liquid contact, which may be strengthened by surfactant-based components called dispersants, emulsifiers, suspending agents, and the like included in the polymerization process. These foams or bubbles are most often generated by the PVC slurry being rapidly decompressed while being injected into a distillation apparatus operated under vacuum from a high-pressure pipe.

### [Disclosure]

### [Technical Problem]

An object of the present disclosure is to provide a distillation apparatus and a distillation method for alleviating an occurrence of foam or bubble.

### [Technical Solution]

In one general aspect, a distillation apparatus may include: a body part in which gas reacts with a distillation target material; a distillation target material supply unit provided above the body part and into which the distillation target material is injected; a gas inlet provided below the body part and into which the gas is introduced; an outlet provided above the body part and discharging the separated volatile material by reacting the distillation target material with the gas; a recovery unit provided below the body part and recovering, from the distillation target material, a resultant material from which the volatile material is removed; a plurality of trays provided inside the body part, and each provided with a plurality of holes; and a downcomer provided on one side of each of the trays and forming a passage through which the distillation target material moves from an upper portion to a lower portion of the body part, in which the distillation target material supply unit may be provided in a plurality so as to disperse and inject the distillation target material.

The distillation target material supply unit may be provided in three.

The distillation target material supply unit may be arranged at intervals of 120° along a circumference of the body part.

The distillation apparatus may further include: a plurality of baffles provided in the tray, arranged in a zigzag shape, and forming a path through which the distillation target material going down from an upper portion of the tray moves from the tray to the downcomer.

The distillation target material may be a polymer prepared through suspension polymerization or emulsion polymerization.

In another general aspect, a distillation method using a distillation apparatus including a body part in which gas reacts with a distillation target material, a distillation target material supply unit provided above the body part and into which the distillation target material is injected, a gas inlet provided below the body part and into which the gas is introduced, an outlet provided above the body part and discharging the separated volatile material by reacting the distillation target material with the gas, a recovery unit provided below the body part and recovering, from the distillation target material, a resultant material from which the volatile material is removed, a plurality of trays provided inside the body part, and each provided with a plurality of holes, and a downcomer provided on one side of each of the trays and forming a passage through which the distillation target material moves from an upper portion to a lower portion of the body part, in which the distillation target material supply unit is provided in a plurality, the distillation method may include: dispersing and injecting the distillation target material into the plurality of distillation target material supply units; and providing a gas to the gas inlet to react the distillation target material with the gas to remove the volatile material included in the distillation target material.

In the dispersing and injecting of the distillation target material into the plurality of distillation target material supply units, the distillation target material may be injected into each of the distillation target material supply units at the same flow rate.

The distillation target material may be a polymer prepared through suspension polymerization or emulsion polymerization.

### [Advantageous Effects]

According to the distillation apparatus and the distillation method according to the present disclosure, since a plurality of distillation target material supply units are provided so that a distillation target material may be dispersed and injected, it is possible to reduce a pressure difference between an inside of a body part and the distillation target material supply unit and prevent foams or bubbles from occurring.

### [BRIEF DESCRIPTION OF THE DRAWINGS]

FIG. 1 is a diagram illustrating a conventional tray type distillation apparatus.
FIG. 2 is a schematic diagram of a tray type distillation apparatus according to an embodiment of the present disclosure.
FIG. 3 is a diagram illustrating an operation of the distillation apparatus to separate a volatile material from a distillation target material.
FIG. 4 is a plan view illustrating a distillation target material supply unit and a top tray in the tray type distillation apparatus according to the embodiment of the present disclosure.
FIG. 5 is a cross-sectional view taken along line B-B' of FIG. 4.
FIG. 6 is a diagram illustrating a range in which a normal operation is possible according to a gas-liquid (slurry) flow rate in the tray-type distillation apparatus.

### [Best Mode]

Hereinafter, a distillation apparatus according to the present disclosure will be described in detail with reference to the accompanying drawings. The accompanying drawings are provided by way of example in order to sufficiently transfer the spirit of the present disclosure to those skilled in the art, and the present disclosure is not limited to the accompanying drawing provided below, but may be implemented in another form.

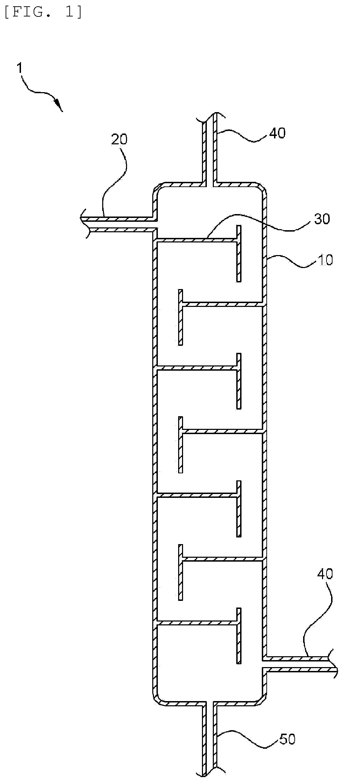

FIG. 1 is a diagram illustrating a conventional tray type distillation apparatus 1.

Referring to FIG. 1, the conventional tray type distillation apparatus 1 is an apparatus that makes a distillation target material introduced from an upper portion 20 flow into a tray 30, and separates a volatile material included in the distillation target material while the high-temperature gas introduced from the lower portion 40 rises in a vertical direction with a bottom surface of the tray 30 through a plurality of holes provided at a bottom of the tray 30.

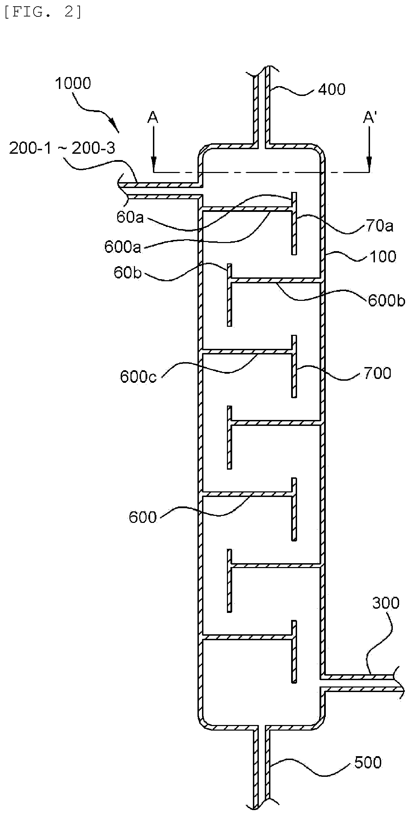

Hereinafter, a tray type distillation apparatus according to an embodiment of the present disclosure will be described with reference to FIGS. 2 to 5.

FIG. 2 is a schematic diagram of a tray type distillation apparatus according to an embodiment of the present disclosure.

Referring to FIG. 2, the tray type distillation apparatus 1000 according to the embodiment of the present disclosure includes a body part 100, distillation target material supply units 200-1 to 200-3, a gas inlet 300, an outlet 400, a recovery unit 500, a tray 600, and a downcomer 700.

The body part 100 is a cylindrical chamber in which a distillation target material and gas react therein, and includes a plurality of trays 600 and downcomers 700 accommodated therein, in which the distillation target material is introduced from the upper portion of the body part 100 and gas (or vapor) is introduced from the lower portion of the body part 100.

The distillation target material supply units 200-1 to 200-3 are a pipe into which the distillation target material is injected, and is provided in an upper portion of the body part 100 so that the distillation target material may be introduced from the upper portion and may move toward the lower portion by gravity.

More specifically, the distillation target material supply units 200-1 to 200-3 are provided above a top tray 600a so that the injected distillation target material drops to the top tray 600a.

In the case, in the tray type distillation apparatus 1000 of the present disclosure, the plurality of distillation target material supply units 200-1 to 200-3 are provided in a plurality so that the distillation target material may be dispersed and injected.

Meanwhile, in an embodiment of the present disclosure, PVC is described as an example of a distillation target material, but is not limited thereto. When the distillation target material is PVC, the distillation target material is in the form of PVC slurry or latex, and contains 10 to 60 wt% of PVC solid particles through suspension, micro-suspension, emulsion polymerization, and the like. In this case, PVC may be a single monomer product or a copolymer product.

The gas inlet 300 is configured to inject gas, and is provided in the lower portion of the body part 100 to allow the gas to rise from the lower portion to the upper portion as opposed to a direction in which the distillation target material is introduced.

In addition, the upper portion of the body part 100 is provided with an outlet 400 for discharging the volatile material separated by the reaction of the gas with the residual gas and the distillation target material to the outside of the distillation apparatus 1000, and the lower portion of the body part 100 is provided with a recovery unit 500 for recovering a high-purity product that is a resultant material from which the volatile material is removed.

In addition, a plurality of trays 600 each are provided inside the body part 100 at predetermined intervals. A plurality of holes may be provided in each tray 600.

A downcomer 700 is provided on one side of each tray 600 to form a passage through which the distillation target material moves from the upper portion to the lower portion of the body part 100. Since the downcomer 700 is a passage through which the distillation target material that has horizontally moved the tray 600 moves to the next tray 600 located in the lower portion, when the downcomer is provided at one end of the n-1th tray, the downcomer is provided at the other end of the nth tray, and the downcomer is provided at one end of the n+1th tray.

That is, the distillation target material that has gone down through the downcomer 700 may move horizontally on the tray 600 and move to the next tray 600 through the downcomer 700 located on the opposite side.

Meanwhile, the tray type distillation apparatus 1000 according to an embodiment of the present disclosure may further include a baffle 800.

The plurality of baffles 800 are provided in each tray 600 and arranged in a zigzag form to form a flow path through which the distillation target material going down from the upper portion of the tray 600 moves to the downcomer 700 on the tray 600.

When the baffle 800 is provided, the movement path through which the distillation target material and gas may react is long, thereby securing a long gas-liquid reaction time and moving the distillation target material in one direction on the tray 600.

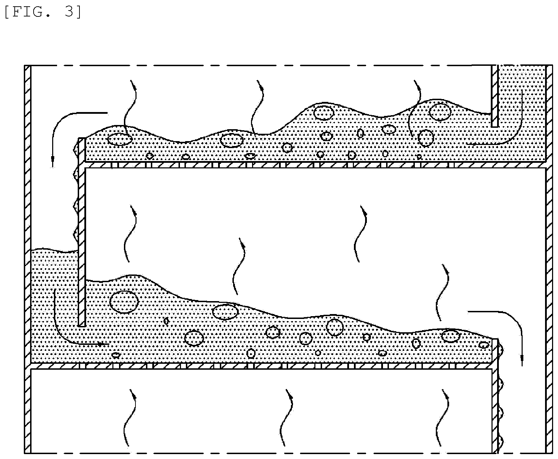

FIG. 3 is a diagram illustrating an operation of a tray type distillation apparatus 1000 according to the embodiment of the present disclosure to separate the volatile material from the distillation target material.

Referring further to FIGS. 2 and 3, after the distillation target material of the n-1th tray 600a overflows a weir 60a and is introduced into a downcomer 70a vertically installed over the n-1th tray 600a and the nth tray 600b, the distillation target material flows horizontally on the nth tray 600b, overflows the weir 60b of the nth tray 600b, and goes down to the n+1th tray 600c.

In this case, while the distillation target material flows horizontally along the flow path formed by the baffle 800 from the bottom surface of the tray 600, the heat and material are transferred while being in contact with the gas rising through the plurality of holes provided on the bottom surface of the tray 60, which separates the volatile material included in the distillation target material.

Here, the downcomer 70a serves similarly to a dam that makes the distillation target material flowing down from the upper tray 600a flow onto the lower tray 600b.

As described above, in the conventional tray type distillation apparatus 1, the distillation target material is injected from the upper portion 20. At the initial injection, after the distillation target material is injected with a high pressure through a narrow pipe-type inlet, a sudden decompression occurs while the distillation target material being injected into the body part 10 whose inside is a vacuum.

In this case, in the case of a poly vinyl chloride (PVC) polymerization process, the evaporation amount of a vinyl chloride monomer (VCM) is maximized to generate foam. When the foam is generated, the foam reaches the adjacent upper tray and interferes with normal flow and operation, or reduces a gas-liquid contact area to weaken a material transfer effect. In particular, the foam generated at the top inside the body part 10 may be discharged to the rear stage process to contaminate the process, or may develop into a scale later to deteriorate product quality and physical properties.

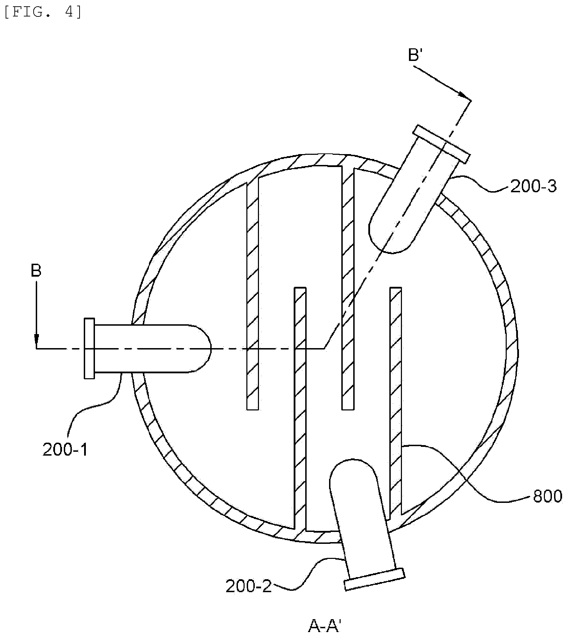

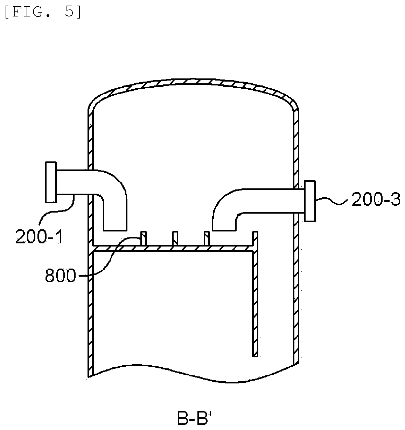

FIG. 4 is a plan view illustrating the distillation target material supply units 200-1 to 200-3 and the top tray 600a in the tray type distillation apparatus 1000 according to the embodiment of the present disclosure, and FIG. 5 is a cross-sectional view taken along B-B' of FIG. 4.

The tray type distillation apparatus 1000 according to the present disclosure provides a plurality of distillation target material supply units 200-1 to 200-3 in order to solve the above-described problems, and the distillation target material, for example, PVC, is dispersed and injected into each of the plurality of distillation target material supply units 200-1 to 200-3. In the case where a pipe having the same diameter as the conventional one is designed as the distillation target material supply units 200-1 to 200-3, when the PVC is dispersed and injected into the plurality of distillation target material supply units 200-1 to 200-3, the flow rate of PVC injected into one distillation target material supply unit 200-1 is reduced in inverse proportion to the number of distillation target material supply units 200-1 to 200-3. Accordingly, the pressure difference between the inside of the body part 100 and the distillation target material supply units 200-1 to 200-3 is reduced, and it is possible to prevent foam or bubbles from occurring.

Preferably, two to five distillation target material supply units 200-1 to 200-3 may be provided.

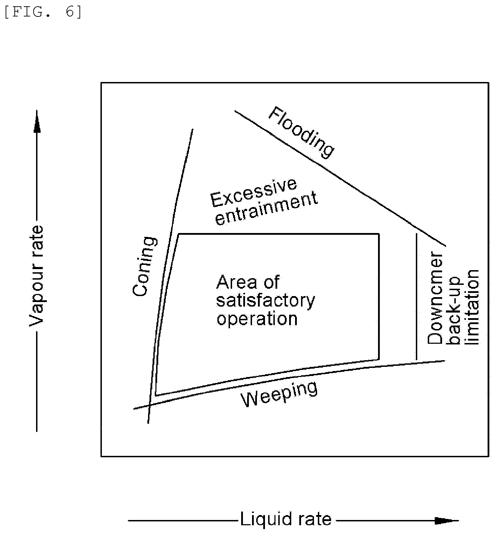

Meanwhile, the tray type distillation apparatus has a range in which normal operation is possible depending on the gas-liquid (slurry) flow rate. FIG. 6 is a diagram illustrating this. When the flow rate of the PVC injected is equal to or less than a predetermined threshold, the PVC does not move horizontally on the tray 600 and is precipitated. The PVC, which does not flow and is precipitated, may accumulate and change to scale, and may block the hole of the tray 600 to reduce the efficiency of the distillation apparatus.

When the PVC of the same flow rate is injected into the plurality of distillation target material supply units 200-1 to 200-3, in order to prevent foam or bubbles from occurring while supplying a flow rate greater than the above-described threshold flow rate, it should be dispersed and injected as much as 1/3 of the flow rate into one distillation target material supply unit as in the related art. Therefore, in the tray type distillation apparatus 1000 according to the present disclosure, it is most preferable that three distillation target material supply units 200-1 to 200-3 are provided. In this case, the distillation target material supply units 200-1 to 200-3 may be arranged at intervals of 120° along the outer circumference of the body part 100.

Hereinafter, a distillation method according to an embodiment of the present disclosure will be described.

Each step of the distillation method according to an embodiment of the present disclosure may be performed by the tray type distillation apparatus 1000 described above, and the distillation method includes dispersing and injecting the distillation target material into the plurality of distillation target material supply units 200-1 to 200-3 (S100) and providing gas to the gas inlet 300 to react the distillation target material with the gas to remove the volatile material included in the distillation target material (S200).

The distillation target material may be a polymer prepared through suspension polymerization or emulsion polymerization.

Examples of the polymer prepared by the suspension polymerization process may include poly (vinyl chloride) (PVC), poly (methyl methacrylate) (PMMA), polytetrafluoroethylene (PTFE), polystyrene (PS), and the like.

Examples of the polymer prepared by the emulsion polymerization process may include poly (vinyl chloride) (PVC), poly (methyl methacrylate) (PMMA), polytetrafluoroetylene (PTFE), poly (vinyl alcohol) (PVA), etc.

In an embodiment of the present disclosure, PVC is described as an example of a distillation target material, but is not limited thereto. When the distillation target material is PVC, the distillation target material is in the form of PVC slurry or latex, and contains 10 to 60 wt% of PVC solid particles through suspension, micro-suspension, emulsion polymerization, and the like. In this case, the PVC may be a single monomer product or a copolymer product.

In the dispersing of the distillation target material to the plurality of distillation target material supply units 200-1 to 200-3 (S100), the PVC may be injected into each distillation target material supply unit at the same flow rate. In this case, the flow rate to be injected into each distillation target material supply unit is 1/3 of that when only one distillation target material supply unit is provided, which is the minimum flow rate at which the distillation apparatus may be operated normally as described above.

In addition, in the dispersing and injecting of the PVC into the plurality of distillation target material supply units 200-1 to 200-3 (S100), the injected flow rate may vary according to the positions of the distillation target material supply units 200-1 to 200-3. For example, referring to FIG. 4, only the flow rate of PVC supplied to the distillation target material supply unit 200-1 farthest from the downcomer 700 should be greater than the minimum flow rate (1/3 compared to the conventional distillation apparatus having only one supply unit), and the PVC may be dispersed and injected in such a way that the closer the distillation target material supply units 200-2 and 200-3 is to the downcomer 700, the smaller the flow rate is supplied to get closer to the minimum flow rate.

In this case, the flow rate may be differently injected by changing the diameter of the pipe of the distillation target material supply units 200-1 to 200-3 or installing a nozzle.

Since it is necessary to move a longer flow path on the tray 600 as the distance from the downcomer 700 increases, the flow rate should be faster, and therefore, a larger flow rate of PVC needs to be injected. Since as the distance from the downcomer 700 is close, it moves only a short flow path to the tray 600 of the lower portion through the downcomer 700 on the tray 600, it is necessary to lengthen the reaction time with the gas by slowing the flow rate. Of course, even in this case, the flow rate that satisfies the minimum flow rate or more should be injected.

That is, by adjusting the flow rate of PVC injected into the distillation target material supply unit 200-1 far from the downcomer 700 to be greater than the minimum flow rate, it is possible to prevent the PVC from precipitated while flowing along the flow path, and by adjusting the flow rate of PVC injected into the distillation target material supply unit 200-3 closest to the downcomer 700, it is possible to prevent the decrease in the separation efficiency of the volatile material by making the reaction time between PVC and gas as long as possible.

As described above, although the present disclosure has been described with reference to the limited examples and drawings, the embodiments given for the purpose of explanation of the present disclosure are only one embodiment in which the present disclosure is embodied, and in order to realize the gist of the present disclosure, combinations in various forms are possible. Therefore, the present disclosure is not limited to the above embodiments, and as claimed in the following claims, without departing from the gist of the present disclosure, it will be said that the technical features of the present disclosure are possible to the extent that various modifications can be made by a person with ordinary knowledge in the field to which the disclosure pertains.

## Claims

1. A distillation apparatus, comprising:
a body part in which gas reacts with a distillation target material;
a distillation target material supply unit provided above the body part and into which the distillation target material is injected;
a gas inlet provided in a lower portion of the body part and into which the gas is introduced;
an outlet provided in an upper portion of the body part and discharging the separated volatile material by reacting the distillation target material with the gas;
a recovery unit provided below the body part and recovering, from the distillation target material, a resultant material from which the volatile material is removed;
a plurality of trays provided inside the body part, and each provided with a plurality of holes; and
a downcomer provided on one side of each of the trays and forming a passage through which the distillation target material moves from an upper portion to a lower portion of the body part,
wherein the distillation target material supply unit is provided in a plurality so as to disperse and inject the distillation target material.

2. The distillation apparatus of claim 1, wherein the distillation target material supply unit is provided in three.

3. The distillation apparatus of claim 2, wherein the distillation target material supply unit is arranged at intervals of 120° along a circumference of the body part.

4. The distillation apparatus of claim 1, further comprising:
a plurality of baffles provided in the tray, arranged in a zigzag shape, and forming a path through which the distillation target material going down from an upper portion of the tray moves from the tray to the downcomer.

5. The distillation apparatus of claim 1, wherein the distillation target material is a polymer prepared through suspension polymerization or emulsion polymerization.

6. A distillation method using a distillation apparatus including a body part in which gas reacts with a distillation target material, a distillation target material supply unit provided above the body part and into which the distillation target material is injected, a gas inlet provided below the body part and into which the gas is introduced, an outlet provided above the body part and discharging the separated volatile material by reacting the distillation target material with the gas, a recovery unit provided below the body part and recovering, from the distillation target material, a resultant material from which the volatile material is removed, a plurality of trays provided inside the body part, and each provided with a plurality of holes, and a downcomer provided on one side of each of the trays and forming a passage through which the distillation target material moves from an upper portion to a lower portion of the body part, in which the distillation target material supply unit is provided in a plurality, the distillation method comprising:
dispersing and injecting the distillation target material into the plurality of distillation target material supply units; and
providing a gas to the gas inlet to react the distillation target material with the gas to remove the volatile material included in the distillation target material.

7. The distillation method of claim 6, wherein, in the dispersing and injecting of the distillation target material into the plurality of distillation target material supply units, the distillation target material is injected into each of the distillation target material supply units at the same flow rate.

8. The distillation method of claim 6, wherein the distillation target material is a polymer prepared through suspension polymerization or emulsion polymerization.
